# EUROPÄISCHE PATENTSCHRIFT

(11) **EP 2 684 005 B1**
(45) Veröffentlichungstag und Bekanntmachung des Hinweises auf die Patenterteilung: **06.05.2015**
(21) Anmeldenummer: 11720012.1
(22) Anmeldetag: 10.03.2011
(51) Int. Cl.: F41G 1/38

(54) **VERSTELLVORRICHTUNG ZUM VERSTELLEN DER ABSEHENEINRICHTUNG EINES ZIELFERNROHRS**
ADJUSTING DEVICE FOR ADJUSTING THE RETICLE UNIT OF A TELESCOPIC SIGHT
DISPOSITIF DE RÉGLAGE DESTINÉ À RÉGLER LE RÉTICULE D'UNE LUNETTE DE VISÉE

(43) Veröffentlichungstag der Anmeldung: 15.01.2014
(73) Patentinhaber: Steiner-Optik GmbH, 95448 Bayreuth (DE)
(72) Erfinder: JÄSCHKE, Oliver, 95448 Bayreuth (DE); LOTTES, Gerd, 91257 Pegnitz (DE)
(74) Vertreter: Hafner, Dieter
(86) Internationale Anmeldenummer: PCT/DE2011/000251
(87) Internationale Veröffentlichungsnummer: WO 2012/119574

(56) Entgegenhaltungen:
- EP-A2- 2 314 978
- DE-A1-102006 016 834
- US-A1- 2003 145 505
- US-B1- 6 691 447

## Beschreibung

Die Erfindung betrifft eine Verstellvorrichtung zum Verstellen der Abseheneinrichtung eines Zielfernrohrs mit den weiteren Merkmalen des Oberbegriffs des Patentanspruchs 1.

Aus DE 10 2006 016 834 A1 ist eine Verstellvorrichtung bekannt, die zum Verstellen einer Abseheneinrichtung eines Zielfernrohrs dient. Die insgesamt turmartig aufgebaute Verstellvorrichtung weist eine drehbare Einstellkappe auf, die über eine Übertragungseinrichtung an das Absehen innerhalb des Zielfernrohrs gekoppelt ist, um die Drehbewegung der Einstellkappe in eine Verstellbewegung des Absehens umzusetzen, die in der Regel linear ist. Derartige Verstellvorrichtungen dienen dazu, das Absehen an unterschiedliche Schussentfernungen anzupassen. Um eine möglichst feinfühlige Verstellung und damit ein exaktes Schussergebnis sicherzustellen, ist bei der bekannten Vorrichtung der Drehbereich der Einstellkappe für mehr als eine Umdrehung ausgelegt, d. h. er umfasst annähernd zwei volle Umdrehungen. Der Benutzer hat die Möglichkeit, die Drehposition der Einstellkappe und damit die Anpassung des Absehens an die Schussentfernung anhand von Skalenwerten abzulesen, die den jeweiligen Drehbereichen zugeordnet sind. Ein umlaufender Satz von Skalenwerten ist zur ersten Umdrehung bzw. zu einem ersten Umdrehungsbereich der Einstellkappe zugehörig, ein zweiter Satz von Skalenwerten, der über oder unter dem ersten Satz angeordnet ist, ist zum zweiten Umdrehungsbereich der Einstellkappe zugehörig.

Bei der bekannten Stellvorrichtung sind immer beide Sätze von Skalenwerten sichtbar. Damit der Benutzer entscheiden kann, welcher Satz von Skalenwerten abhängig von der Stellung der Einstellkappe innerhalb eines ersten oder zweiten Drehbereichs der Zutreffende ist, weist die bekannte Vorrichtung ein ertastbares Anzeigemittel auf, das aus der Verstellvorrichtung heraussteht, wenn die Einstellkappe innerhalb des zweiten Drehbereichs eingestellt ist.

Alternativ ist bei der Druckschrift nach dem Stand der Technik noch vorgesehen, eine zweite fühlbare Rasterung bei der Einstellkappe vorzusehen, die durch zweite Rastmittel gebildet wird, wenn die Drehstellung der Einstellkappe innerhalb des zweiten Drehbereichs vorliegt. Nachteilig bei diesen bekannten Einstellvorrichtungen ist, dass es trotz der getroffenen Maßnahmen zur Verwechslungen zwischen den beiden immer sichtbaren Skalenwerten kommen kann.

Der Erfindung liegt die Aufgabe zugrunde, eine Verstellvorrichtung mit den Merkmalen des Oberbegriffs des Anspruchs 1 derart auszubilden, dass die Übersichtlichkeit bei der Ablesung der Skalenwerte verbessert ist und der Benutzer hinsichtlich einer Fehlervermeidung unterstützt wird. Diese Aufgabe wird durch die kennzeichnenden Merkmale des Anspruchs 1 gelöst, vorteilhafte Weiterbildungen der Erfindung ergeben sich aus den Unteransprüchen.

Nach der Erfindung ist vorgesehen, dass beim Übergang von dem ersten Umdrehungsbereich zum zweiten Umdrehungsbereich der Einstellkappe wenigstens ein die Skalenwerte tragender Indexring und/oder ein einen Indexringbereich bereichsweise abdeckender Blendenring derart höhenverlagerbar ist, dass während der ersten Umdrehung der Einstellkappe nur ein erster Satz der Skalenwerte sichtbar ist und während der zweiten Umdrehung der Einstellkappe auch oder vorzugsweise nur der zweite Satz von Skalenwerten sichtbar ist.

Um dies zu verwirklichen, sind unterschiedliche mechanische Möglichkeiten gegeben. Eine erste Möglichkeit besteht darin, den ersten Satz von Skalenwerten auf einem ersten Indexring und den zweiten Satz von Skalenwerte auf einem innerhalb des ersten Indexrings angeordneten zweiten Indexring anzuordnen und den ersten, d. h. äußeren Indexring, beim Übergang vom ersten Drehbewegungsbereich der Einstellkappe zum zweiten Drehbewegungsbereich derart höhenzuverlagern, dass vor der Höhenverlagerung (erster Drehbereich) die Skalenwerte auf dem zweiten Indexring abgedeckt sind und nur die Skalenwerte auf dem ersten äußeren Indexring sichtbar sind und nach der Höhenverlagerung, d. h. innerhalb des zweiten Drehbewegungsbereichs der Blick auf Skalenwerte, die auf dem zweiten Indexring angeordnet sind, durch den ersten Indexring freigegeben wird und die auf dem ersten Indexring angeordneten Skalenwerte unter einem Blendenbereich verschwinden. Dabei ist es möglich, den äußeren Indexring entweder nach oben oder nach unten zu verlagern und entweder oben oder unten den abdeckenden Blendenbereich für die ersten Skalenwerte auf dem äußeren Indexring vorzusehen.

Eine weitere Möglichkeit besteht darin, sowohl die ersten Skalenwerte als auch die zweiten Skalenwerte zusammen mit wenigstens einer Strichskala, die beispielsweise zwischen den ersten und zweiten Skalenwerten angeordnet sein kann, auf nur einem Indexring vorzusehen und diesen abhängig von dem Drehbereich innerhalb eines Übergangsbereichs derart nach oben oder unten zu verlagern, dass einmal der erste Satz von Skalenwerten abgedeckt wird und alternativ dann der zweite Satz von Skalenwerten abgedeckt wird und der andere sichtbar ist.

Eine weitere Möglichkeit besteht darin, den Indexring mit den beiden Sätzen von Skalenwerten nicht höhenverlagerbar anzuordnen und auf der Außenseite des Indexrings obere und untere Ringblenden vorzusehen, die abhängig vom gewählten Drehbereich den oberen oder unteren Satz von Skalenwerten auf dem nicht höhenverlagerbaren Indexring abdecken. Auch eine Kombination von höhenverlagerbaren Blenden und höhenverlagerbaren Indexringen ist denkbar.

Bei einem bevorzugten Ausführungsbeispiel wird der erste Satz von Skalenwerten des ersten äußeren Indexrings beim Übergang von der ersten Umdrehung zur zweiten Umdrehung der Einstellkappe unter einen nach unten weisenden Rand der Einstellkappe verlagert und dadurch abgedeckt. Durch die Höhenverlagerung des ersten Indexrings gibt die Unterkante des ersten Indexrings den zweiten Satz von Skalenwerten frei, die auf dem innerhalb des ersten Indexrings angeordneten nicht höhenverlagerbaren zweiten Indexring angeordnet sind.

Grundsätzlich werden der erste und der zweite Indexring - ob diese nun höhenverlagerbar sind oder nicht - mit Einstellkappe synchron verdreht. Einer Einstellung des Absehens entsprechende Skalenwerte können anhand einer Indexmarke abgelesen werden, die unverdrehbar an einem Sockel der Verstellvorrichtung angeordnet ist. Die Verstellvorrichtung ist insgesamt turmartig aufgebaut, der Sockelbereich des turmartigen Aufbaus dient zur Befestigung an der Oberseite eines Zielfernrohrs, da derartig feinverstellbare Verstellvorrichtungen in der Regel dazu benutzt werden, eine Absehenhöhenverstellung vorzunehmen, da nur durch diese eine Adaption an unterschiedliche Schussentfernungen möglich ist.

Im Innenbereich der Verstellvorrichtung ist zur Höhenverlagerung des oder der Indexringe oder der wenigstens einen Blende eine umlaufende Kulissenführung angeordnet, in die ein Abtaststift eintaucht, der über Zwischenteile oder direkt mit einem Indexring oder einer Blende gekoppelt sein kann. Je nach Drehstellung wird der Stift in der Kulissenführung während des ersten Umdrehungsbereichs ohne Höhenverlagerung verbleiben und der daran angekoppelte Indexring dadurch seine Höhenlage beibehalten. Ist der Stift durch Weiterdrehung zum Kulissenführungsmittelbereich gelangt, der einen abgeschrägt stufigen Verlauf aufweist, wird der Stift diesem abgeschrägt stufigen Verlauf folgen und dadurch die Höhenverlagerung des an ihn angekoppelten Indexrings oder Blendenrings verursachen. Innerhalb des zweiten Umdrehungsbereichs folgt dann der Stift der zum ersten Umdrehungsbereich im Wesentlichen parallelen Führungsnut der Kulissenführung, eine weitere Höhenverlagerung erfolgt innerhalb des zweiten Umdrehungsbereichs dann nicht mehr.

Die Erfindung ist anhand von Ausführungsbeispielen in den Zeichnungsfiguren näher erläutert. Diese zeigen
- Fig. 1: eine perspektivische Ansicht der erfindungsgemäßen Verstellvorrichtung;
- Fig. 2: eine Seitenansicht der Verstellvorrichtung gem. Fig. 1;
- Fig. 3: eine Detail-Seitenansicht vor Einleitung einer Verstell-Drehbewegung über den ersten Drehbereich;
- Fig. 4: eine Darstellung gem. Fig. 3, wobei der erste Drehbereich annähernd durchlaufen ist;
- Fig. 5: eine Darstellung gem. Fig. 4, wobei eine Weiterdrehung in den Bereich einer Umschaltung zwischen den Skalen erfolgt;
- Fig. 6: eine Darstellung gem. Fig. 5, wobei die Drehbewegung so weitergeführt ist, dass nur noch Skalenwerte des zweiten Drehbereichs sichtbar sind;
- Fig. 7: einen mittigen Vertikalschnitt durch die Verstellvorrichtung, wobei eine Skalendarstellung gem. Fig. 3 sichtbar ist;
- Fig. 8: einen Schnitt gem. Fig. 7 nach Umschaltung, wobei eine Skalendarstellung gem. Fig. 6 sichtbar ist;

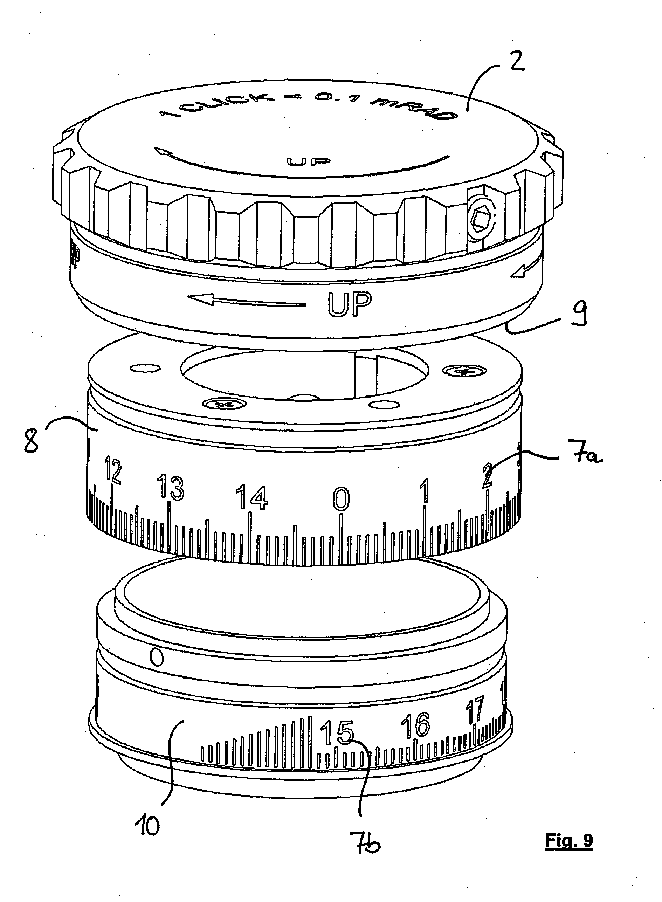

- Fig. 9: eine Darstellung der beiden Indexringe und der Verstellkappe nach Art einer Explosionszeichnung;

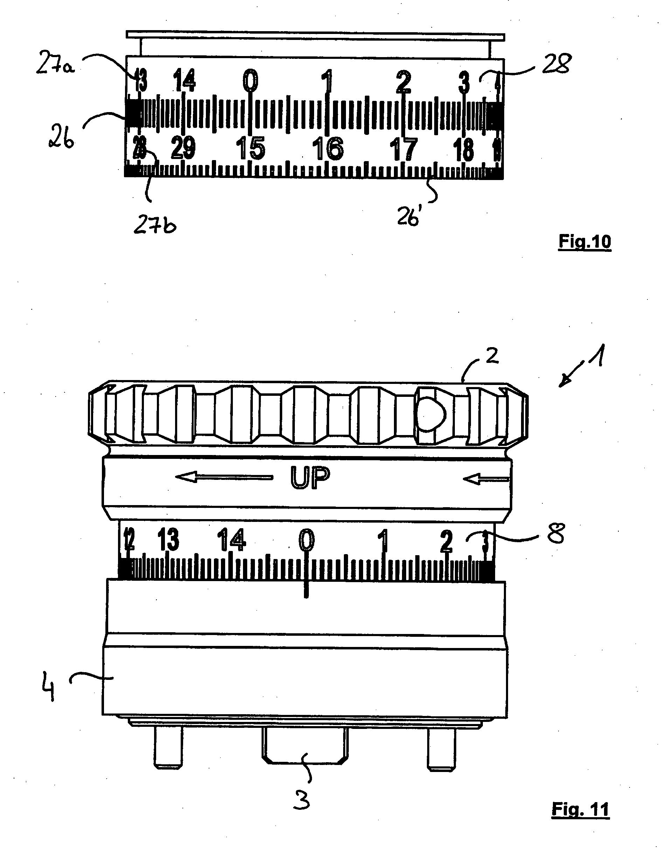

- Fig. 10: eine alternative Ausführungsform eines Indexrings mit zwei alternativ abdeckbaren Skalenwertereihen;
- Fig. 11: eine modifizierte Ausführungsform mit einer Skalenscheibe gem. Fig. 10 in einer ersten Drehstellung;
- Fig. 12: eine Darstellung gem. Fig. 11 in einer modifizierten Drehstellung;
- Fig. 13: eine Darstellung einer Kulissenführung innerhalb der Verstellvorrichtung.

Die in den Zeichnungsfiguren dargestellte Verstellvorrichtung 1 dient zum Verstellen der Abseheneinrichtung eines nicht näher dargestellten Zielfernrohrs und weist eine drehbare Einstellkappe 2 auf, die am oberen Ende eines insgesamt turmartigen Aufbaus der Verstellvorrichtung 1 drehbar angeordnet ist.

Im Inneren der Verstellvorrichtung 1 ist eine Übertragungseinrichtung 3 angeordnet, mit der die Drehbewegung der Einstellkappe 2 in eine Verstellbewegung des Absehens umgesetzt wird. Die Übertragungseinrichtung 3 steht nach unten über einen Sockelbereich 4 der Verstellvorrichtung 1 hinaus.

Der Drehbereich der Einstellkappe 2 umfasst im Wesentlichen zwei Umdrehungen, im Mittelbereich 5 der Verstellvorrichtung 1 sind zwei Sätze von wenigstens einer Strichskala 6 zugeordneten Skalenwerten 7 angeordnet, wobei ein erster Satz von Skalenwerten 7a Verstellwerte anzeigt, die zur ersten Umdrehung der Einstellkappe 2 gehören und ein zweiter Satz von Skalenwerten 7b Verstellwerte anzeigt, die zur zweiten Umdrehung der Einstellkappe 2 gehören.

Beim Übergang von der ersten zur zweiten Umdrehung der Einstellkappe 2, d. h. im sogenannten Umschaltbereich ist ein die Skalenwerte 7a tragender, mit der Einstellkappe 2 vorzugsweise synchron verdrehbarer Indexring derart höhenverlagerbar, dass während der ersten Umdrehung der Einstellkappe 2 nur ein erster Satz der Skalenwerte 7a sichtbar ist und der zweite Satz von Skalenwerten 7b unter einer Abdeckung angeordnet ist und während der zweiten Umdrehung der Einstellkappe 2 nur der zugehörige zweite Satz von Skalenwerten 7b sichtbar ist, wobei der erste Satz von Skalenwerten 7a unter einer Abdeckung angeordnet ist. Abdeckungen können ringförmig umlaufende Blendenbereiche sein, beispielsweise ein nach unten stehender Rand 9 der Einstellkappe 2, der im Bereich des oberen Rands des Indexrings 8 angeordnet ist und unter welchen Rand 9 der erste Satz von Skalenwerten 7a eintaucht, wenn der Indexring 8 nach oben höhenverlagert wird.

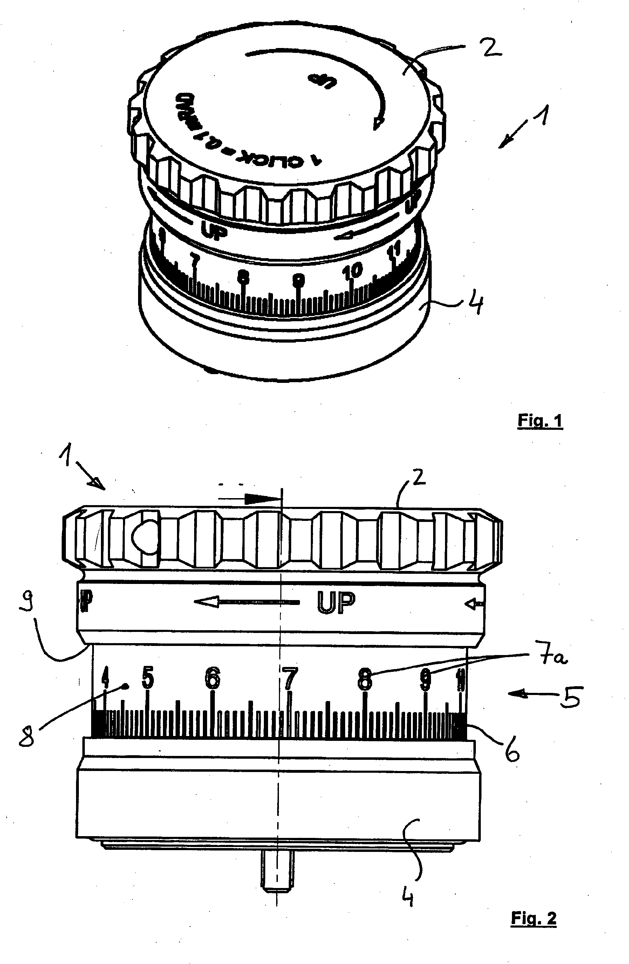

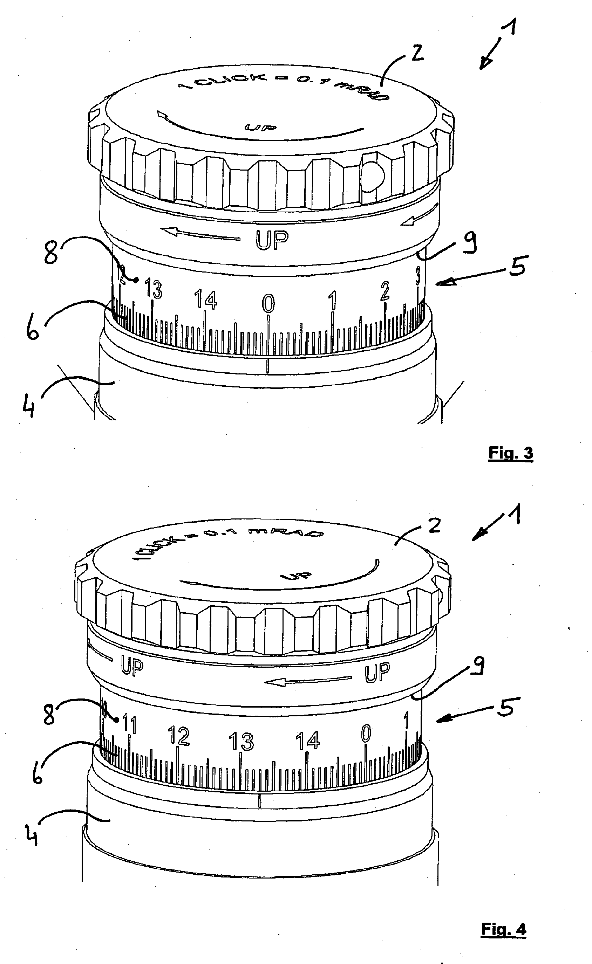

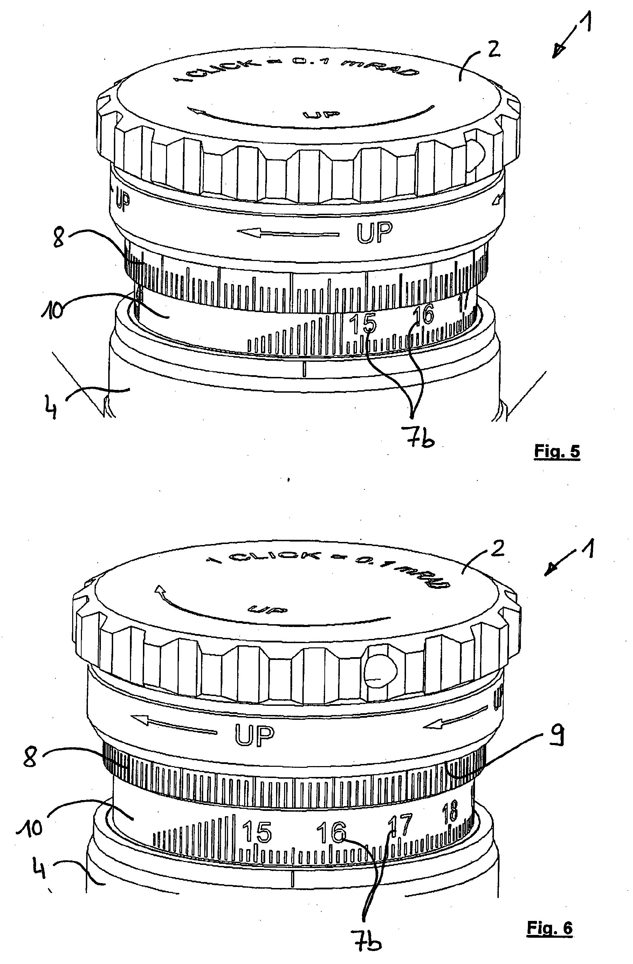

Beim dargestellten Ausführungsbeispiel gem. Figur 1 - 8 ist unter dem in Figuren 1 und 2 sichtbaren Indexring 8 ein zweiter Indexring 10 angeordnet, der die zweiten Skalenwerte 7b trägt und der vor der Umschaltung, d. h. vor der Höhenverlagerung des Indexrings 8 vom Indexring abgedeckt wird. Der erste Indexring 8 bildet quasi die Abdeckung für den zweiten Indexring und die auf diesem angeordneten zweiten Skalenwerte 7b.

Beim dargestellten Ausführungsbeispiel gem. den Figuren 1 - 8 erfolgt die Höhenverlagerung des ersten Indexrings 8 nach oben, so dass die ersten Skalenwerte 7a unter dem nach unten weisenden Rand 9 der Einstellkappe verbracht werden. Es ist aber genauso gut möglich, den äußeren ersten Indexring bei der Umschaltung vom ersten zum zweiten Drehbereich der Einstellkappe nach unten zu verlagern und die ersten Skalenwerte 7a unter eine Ringblende im Bereich des Sockels 4 zu senken.

Eine weitere im Schutzbereich des Anspruchs 1 liegende Ausführungsform sieht vor, auf einem Indexring 28 beide Sätze von Skalenwerten 27a und 27b ober- und unterhalb einer Strichskala 26 anzuordnen. Ein derartiges Ausführungsbeispiel ist in Zeichnungsfiguren 10 - 12 dargestellt. Dieser Indexring 28 ist insgesamt bei der Umschaltung vom ersten zum zweiten Drehbereich der Einstellkappe 2 nach oben und unten verlagerbar, so dass einmal die ersten Indexwerte 27a sichtbar sind und einmal die zweiten Indexwerte 27b sichtbar sind. An der Unterkante des Indexrings 28 ist noch eine weitere Strichskala 26' angeordnet, die ein paralaxenfreies Ablesen ermöglicht. Auch bei dieser Ausführungsform wird der Indexring 28 beim Umschaltvorgang nach oben verlagert, so dass die zum zweiten Umdrehungsbereich gehörigen zweiten Skalenwerte 27b aus einer sie während des ersten Umdrehungsbereichs verdeckenden unteren Ringblende 29 nach oben herausverlagert werden. Die untere Ringblende 29 bildet die Oberkante des Sockelbereichs 4.

Der in Zeichnungsfigur 10 dargestellte Indexring kann auch hinsichtlich seiner Höhe fixiert in der Verstellvorrichtung angeordnet sein, beim Umschaltvorgang werden dann obere und untere Blenden, wie zum Beispiel die untere Ringblende 29 und eine obere Ringblende, wie sie in Zeichnungsfigur 11 dargestellt ist, nach oben und unten verlagert. Auch dadurch wird der Zweck erreicht, dass immer nur ein Satz von Skalenwerten 27a oder 27b sichtbar ist, so dass Fehleinstellungen durch die Bedienungsperson der Verstellvorrichtung 1 vermieden werden.

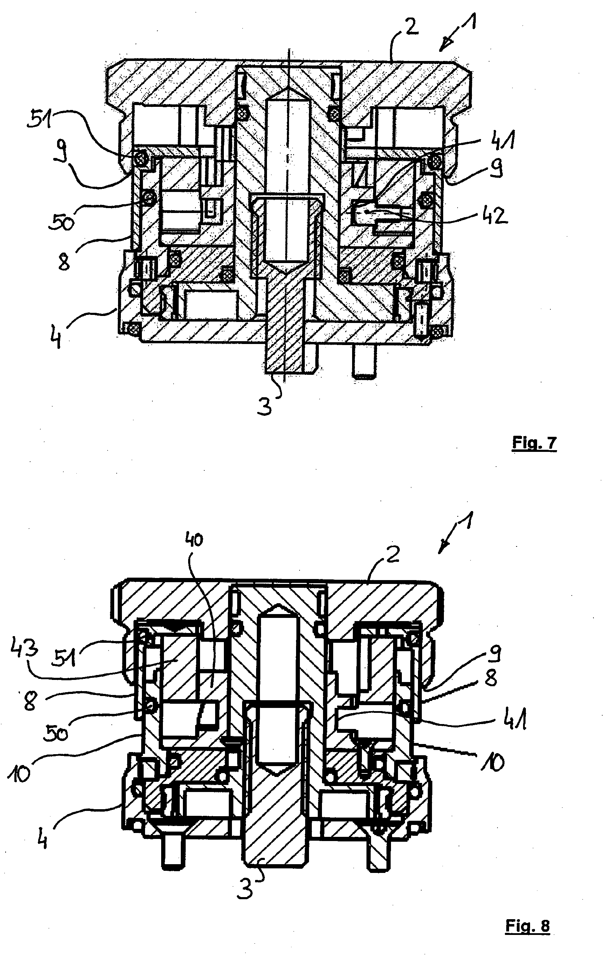

In Zeichnungsfigur 13 ist eine perspektivische Ansicht eines Innenbereichs des turmartigen Aufbaus der Verstellvorrichtung 1 dargestellt. Auf dem Sockelbereich 4 ist drehfest eine Kulissenführung 40 angeordnet, die eine umlaufende Kulissenrinne 41 aufweist, in die ein Abtaststift 42 (Fig. 7) eingreift, der über Kopplungselemente 43 (vgl. Fig. 7 und 8) an die höhenverlagerbaren Elemente, wie zum Beispiel den Indexring 8, angekoppelt ist.

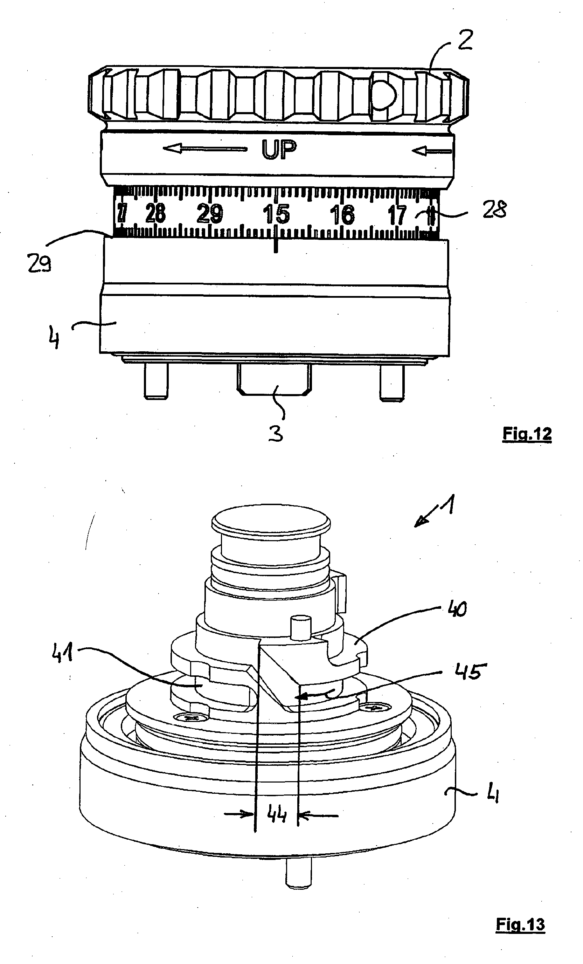

Im Kulissenführungsmittelbereich 44 weist die Kulissenrinne 41 einen abgeschrägt stufigen Verlauf auf, so dass ein Abtaststift, der in Pfeilrichtung 45 gem. Fig. 13 an den Kulissenführungsmittelbereich 44 herangeführt wird, eine Versatzbewegung nach oben durchführt, die dem Abstand der beiden umlaufenden Kulissenrinnen 41 entspricht, wodurch es zu der Höhenverlagerung des an den Stift 42 angekoppelten Bauteils, insbesondere des höhenverlagerbaren Indexrings 8 oder 28, kommt.

Aus den Zeichnungsfiguren 7 und 8 ist noch ersichtlich, dass über eine Mehrzahl von O-Ringen sich gegeneinander bewegende Teile abgedichtet sind. So ist zum Beispiel ein O-Ring 50 vorgesehen, der zwischen der Oberfläche des zweiten Indexrings 10 und der Innenseite des ersten Indexrings 8 abdichtet. Ein weiterer O-Ring 51 dichtet den oberen radial äußeren Bereich des ersten Indexrings 8 gegen die Innenseite des nach unten abstehenden Rands 9 der Einstellkappe 2 ab.

Abschließend sei angemerkt, dass die Erfindung nicht auf die dargestellten Ausführungsbeispiele beschränkt ist, sondern dass sich der der Erfindung zuzumessende Schutzbereich aus den Patentansprüchen und deren Auslegung ergibt.

### BEZUGSZEICHENLISTE

- 1: Verstellvorrichtung
- 2: Einstellkappe
- 3.: Übertragungseinrichtung
- 4: Sockelbereich
- 5: Mittelbereich
- 6: Strichskala
- 7a: Skalenwerte
- 7b: Skalenwerte
- 8: Indexring
- 9: Rand von 2
- 10: 2.Indexring

- 26: Strichskala
- 26': Strichskala
- 27a: Skalenwerte
- 27b: Skalenwerte
- 28: Indexring
- 29: untere Ringblende

- 40: Kulissenführung
- 41: Kulissenrinne
- 42: Abtaststift
- 43: Kopplungselemente
- 44: Kulissenführungsrnittelbereich
- 45: Pfeilrichtung

- 50: O-Ring
- 51: O-Ring

## Patentansprüche

1. Verstellvorrichtung (1) zum Verstellen einer Abseheneinrichtung eines Zielfernrohrs, mit einer drehbaren Einstellkappe (2), einer Übertragungseinrichtung (3) zur Umsetzung der Drehbewegung der Einstellkappe (2) in eine Verstellbewegung des Absehens, wobei der Drehbereich der Einstellkappe (2) im Wesentlichen zwei Umdrehungen umfasst und an der Verstellvorrichtung zwei Sätze von wenigstens einer Strichskala (6) zugeordneten Skalenwerten (7a, 7b, 27a, 27b) angeordnet sind, wobei ein erster Satz von Skalenwerten (7a, 27a) Verstellwerte anzeigt, die zur ersten Umdrehung der Einstellkappe (2) gehören und ein zweiter Satz von Skalenwerten (7b, 27b) Verstellwerte anzeigt, die zur zweiten Umdrehung der Einstellkappe (2) gehören,
**dadurch gekennzeichnet, dass**
beim Übergang von der ersten zur zweiten Umdrehung der Einstellkappe wenigstens ein die Skalenwerte (7a, 27a, 27b) tragender, mit der Einstellkappe (2) verdrehbarer Indexring (8, 28) oder wenigstens einen Indexring bereichsweise abdeckender Blendenring derart höhenverlagerbar ist, dass während der ersten Umdrehung der Einstellkappe (2) nur ein erster Satz der Skalenwerte (7a, 27a) sichtbar und der zweite Satz von Skalenwerten (7b, 27b) unter einer Abdeckung angeordnet ist und während der zweiten Umdrehung der Einstellkappe (2) entweder nur oder auch der zugehörige zweite Satz von kalenwerten (7b, 27b) sichtbar ist, wobei gegebenenfalls der erste Satz von Skalenwerten (7a, 27a) unter einer Abdeckung angeordnet ist.

2. Verstellvorrichtung nach Anspruch 1,
**dadurch gekennzeichnet, dass**
die Abdeckungen der ersten und zweiten Skalenwerte (7) im Bereich des oberen und/oder unteren Randes des wenigstens einen Indexrings (8, 10) angeordnet sind.

3. Verstellvorrichtung nach Anspruch 2,
**dadurch gekennzeichnet, dass**
die beiden Sätze von Skalenwerten (27a, 27b) oberhalb bzw. unterhalb ein und derselben umlaufenden Strichskala (26) auf dem einen Indexring (8) angeordnet sind.

4. Verstellvorrichtung nach Anspruch 1,
**dadurch gekennzeichnet, dass**
die ersten Skalenwerte (7a) auf einem ersten Indexring (8) und die zweiten Skalenwerte (7b) auf einem zweiten Indexring (10) angeordnet sind und einer der Indexringe (8) beim Übergang von der ersten zur zweiten Umdrehung der Einstellkappe (2) derart höhenverlagerbar ist, dass im Drehbereich der zweiten Umdrehung der Einstellkappe (2) die auf dem ersten Indexring (8) angeordneten ersten Skalenwerte (7a) durch ein ringartiges Bauteil (9) verdeckt angeordnet und die auf dem zweiten Indexring (10) angeordneten zweiten Skalenwerte (7b) sichtbar sind.

5. Verstellvorrichtung nach Anspruch 4,
**dadurch gekennzeichnet, dass**
der erste Indexring (8) außenliegend und höhenverlagerbar angeordnet ist, der zweite Indexring (10) innerhalb des ersten Indexrings (8) angeordnet ist sowie der erste Indexring (8) die Abdeckung für die dem zweiten Drehbereich zugeordneten zweiten Skalenwerte (7b) bildet.

6. Verstellvorrichtung nach Anspruch 5,
**dadurch gekennzeichnet, dass**
im Drehbereich der ersten Umdrehung der Einstellkappe (2) der erste Indexring (8) die Skalenwerte (7b) des zweiten Indexrings (10) abdeckt.

7. Verstellvorrichtung nach einem der vorhergehenden Ansprüche,
**dadurch gekennzeichnet, dass**
die ersten Skalenwerte (7a) des ersten Indexrings (8) beim Übergang von der ersten Umdrehung zur zweiten Umdrehung der Einstellkappe (2) unter einen nach unten weisenden Rand (9) der Einstellkappe (2) verlagerbar sind.

8. Verstellvorrichtung nach einem der vorhergehenden Ansprüche,
**dadurch gekennzeichnet, dass**
die zum zweiten Umdrehungsbereich gehörigen zweiten Skalenwerte (27b) beim Übergang von der ersten zur zweiten Umdrehung der Einstellkappe (2) aus einer sie während des ersten Umdrehungsbereichs verdeckenden Ringblende (29) herausverlagert werden.

9. Verstellvorrichtung nach einem der vorhergehenden Ansprüche,
**dadurch gekennzeichnet, dass**
zur Höhenverlagerung des wenigstens einen Indexrings (8, 28) und/oder des wenigstens einen Blendenrings im Innenbereich der Verstellvorrichtung (1) wenigstens eine umlaufende Kulissenführung (40) angeordnet ist, in die wenigstens ein Abtaststift (42) eines Indexrings (8, 28) oder eines Blendenrings eingreift und die bezogen auf die Einstellkappe (2) und die mit der Einstellkappe umlaufenden drehbaren Indexringe (8, 10, 28) unverdrehbar gelagert ist und in einem Kulissenführungsmittelbereich (44) einen abgeschrägt stufigen Verlauf aufweist.

10. Verstellvorrichtung nach einem der vorhergehenden Ansprüche,
**dadurch gekennzeichnet, dass**
die Verstellvorrichtung (1) turmartig aufgebaut ist und in ihrem unteren Sockelbereich (4) einen Montagesockel zur Montage auf einem Zielfernrohr, in ihrem oberen Bereich die Einstellkappe (2) und in ihrem Mittelbereich (5) den wenigstens einen mit der Einstellkappe umlaufenden Indexring (8, 10, 28) aufweist, der über wenigstens ein Kopplungsteil an den in die Kulissenführung (40) eingreifenden Abtaststift (42) zur Höhenverlagerung angekoppelt ist.

11. Verstellvorrichtung nach einem der vorhergehenden Ansprüche,
**dadurch gekennzeichnet, dass**
der erste äußere (8) und der zweite Indexring (10) koaxial übereinander liegend angeordnet sind und der erste äußere Indexring (8) den zweiten Indexring (10) topfartig mit geringem Abstand übergreift.

12. Verstellvorrichtung nach einem der vorhergehenden Ansprüche,
**dadurch gekennzeichnet, dass**
der zweite innenliegende Indexring (10) mit der Einstellkappe (2) verdrehbar und hinsichtlich seiner Höhenlage bezogen auf das Sockelteil (4) unveränderbar angeordnet ist.

## Claims

1. Adjusting device (1) for adjusting a reticle unit of a telescopic sight, with a rotatable setting cap (2), a transmission unit (3) for converting the rotation movement of the setting cap (2) into an adjusting movement of the reticle, wherein the turning range of the setting cap (2) comprises substantially two revolutions, and two sets of scale values (7a, 7b, 27a, 27b) assigned to at least one line scale (6) are arranged on the adjusting device, wherein a first set of scale values (7a, 27a) indicates adjustment values that belong to the first revolution of the setting cap (2), and a second set of scale values (7b, 27b) indicates adjustment values that belong to the second revolution of the setting cap (2), **characterized in that**, during the transition from the first revolution to the second revolution of the setting cap, at least one index ring (8, 28) that bears the scale values (7a, 27a, 27b) and that can be rotated with the setting cap (2), or a diaphragm ring partially covering at least one index ring, is adjustable in height in such a way that, during the first revolution of the setting cap (2), only a first set of the scale values (7a, 27a) is visible and the second set of scale values (7b, 27b) is arranged under a covering and, during the second revolution of the setting cap (2), the associated second set of scale values (7b, 27b) is either visible in addition to the first set or on its own, the first set of scale values (7a, 27a) optionally being arranged under a covering.

2. Adjusting device according to Claim 1, **characterized in that** the coverings of the first and second scale values (7) are arranged in the area of the upper and/or lower edge of the at least one index ring (8, 10).

3. Adjusting device according to Claim 2, **characterized in that** the two sets of scale values (27a, 27b) are respectively arranged above and below one and the same circumferential line scale (26) on the one index ring (8).

4. Adjusting device according to Claim 1, **characterized in that** the first scale values (7a) are arranged on a first index ring (8) and the second scale values (7b) are arranged on a second index ring (10), and, during the transition from the first revolution to the second revolution of the setting cap (2), one of the index rings (8) is adjustable in height in such a way that, in the turning range of the second revolution of the setting cap (2), the first scale values (7a) arranged on the first index ring (8) are concealed by a ring-like component (9), and the second scale values (7b) arranged on the second index ring (10) are visible.

5. Adjusting device according to Claim 4, **characterized in that** the first index ring (8) is arranged lying on the outside and is adjustable in height, the second index ring (10) is arranged inside the first index ring (8), and the first index ring (8) forms the covering for the second scale values (7b) assigned to the second turning range.

6. Adjusting device according to Claim 5, **characterized in that**, in the turning range of the first revolution of the setting cap (2), the first index ring (8) covers the scale values (7b) of the second index ring (10).

7. Adjusting device according to one of the preceding claims, **characterized in that**, during the transition from the first revolution to the second revolution of the setting cap (2), the first scale values (7a) of the first index ring (8) can be moved underneath a downwardly pointing edge (9) of the setting cap (2).

8. Adjusting device according to one of the preceding claims, **characterized in that**, during the transition from the first revolution to the second revolution of the setting cap (2), the second scale values (27b) belonging to the second turning range are moved out from a ring diaphragm (29) that conceals them during the first turning range.

9. Adjusting device according to one of the preceding claims, **characterized in that**, to adjust the height of the at least one index ring (8, 28) and/or of the at least one diaphragm ring, at least one circumferential slotted guide (40) is arranged in the inner area of the adjusting device (1), into which slotted guide (40) at least one tracer pin (42) of an index ring (8, 28) or of a diaphragm ring engages, and which slotted guide (40) is mounted non-rotatably with respect to the setting cap (2), and to the rotatable index rings (8, 10, 28) turning with the setting cap (2), and, in a middle area (44) of the slotted guide, has a beveled step profile.

10. Adjusting device according to one of the preceding claims, **characterized in that** the adjusting device (1) is structured like a turret and, in its lower base area (4), has a fastening base for fastening on a telescopic sight, and, in its upper area, it has the setting cap (2) and, in its middle area (5), it has the at least one index ring (8, 10, 28) turning with the setting cap, which index ring (8, 10, 28) is coupled for height adjustment, via at least one coupling part, to the tracer pin (42) engaging in the slotted guide (40).

11. Adjusting device according to one of the preceding claims, **characterized in that** the first, outer index ring (8) and the second index ring (10) are arranged lying coaxially one over the other, and the first, outer index ring (8) engages like a pot, and with slight spacing, over the second index ring (10).

12. Adjusting device according to one of the preceding claims, **characterized in that** the second, inner index ring (10) is rotatable with the setting cap (2) and is unchangeable in terms of its height with respect to the base part (4).

## Revendications

1. Dispositif de réglage (1) destiné à régler le réticule d'une lunette de visée, comprenant un capuchon d'ajustement rotatif (2), un dispositif de transfert (3) pour convertir le mouvement de rotation du capuchon d'ajustement (2) en un mouvement de réglage du réticule, la plage de rotation du capuchon d'ajustement (2) comprenant essentiellement deux rotations, et deux jeux de valeurs d'échelle (7a, 7b, 27a, 27b) associées à au moins une échelle graduée (6) étant disposés au niveau du dispositif de réglage, un premier jeu de valeurs d'échelle (7a, 27a) indiquant des valeurs de réglage qui correspondent à une première rotation du capuchon d'ajustement (2) et un deuxième jeu de valeurs d'échelle (7b, 27b) indiquant des valeurs de réglage qui correspondent à la deuxième rotation du capuchon d'ajustement (2),
**caractérisé en ce que**
lors de la transition de la première à la deuxième rotation du capuchon d'ajustement, au moins une bague d'indexage (8, 28) portant les valeurs d'échelle (7a, 27a, 27b) et pouvant tourner avec le capuchon d'ajustement (2) ou au moins une bague de diaphragme recouvrant en partie une bague d'indexage peut être déplacée en hauteur de telle sorte que pendant la première rotation du capuchon d'ajustement (2) seulement un premier jeu des valeurs d'échelle (7a, 27a) soit visible et que le deuxième jeu de valeurs d'échelle (7b, 27b) soit disposé sous un recouvrement et que pendant la deuxième rotation du capuchon d'ajustement (2) soit seulement soit également le deuxième jeu associé de valeurs d'échelle (7b, 27b) soit visible, le premier jeu de valeurs d'échelle (7a, 27a) étant éventuellement disposé sous un recouvrement.

2. Dispositif de réglage selon la revendication 1,
**caractérisé en ce que**
les recouvrements des premières et deuxièmes valeurs d'échelle (7) sont disposés dans la région du bord supérieur et/ou inférieur de l'au moins une bague d'indexage (8, 10).

3. Dispositif de réglage selon la revendication 2,
**caractérisé en ce que**
les deux jeux de valeurs d'échelle (27a, 27b) sont disposés au-dessus, respectivement en dessous, d'une même et unique échelle graduée périphérique (26) sur la bague d'indexage (8).

4. Dispositif de réglage selon la revendication 1,
**caractérisé en ce que**
les premières valeurs d'échelle (7a) sont disposées sur une première bague d'indexage (8) et les deuxièmes valeurs d'échelle (7b) sont disposées sur une deuxième bague d'indexage (10) et l'une des bagues d'indexage (8), lors de la transition de la première à la deuxième rotation du capuchon d'ajustement (2), pouvant être déplacée en hauteur de telle sorte que dans la plage de rotation de la deuxième rotation du capuchon d'ajustement (2), les premières valeurs d'échelle (7a) disposées sur la première bague d'indexage (8) soient disposées de manière recouverte par un composant de forme annulaire (9) et les deuxièmes valeurs d'échelle (7b) disposées sur la deuxième bague d'indexage (10) soient visibles.

5. Dispositif de réglage selon la revendication 4,
**caractérisé en ce que**
la première bague d'indexage (8) est disposée à l'extérieur et de manière déplaçable en hauteur, la deuxième bague d'indexage (10) est disposée à l'intérieur de la première bague d'indexage (8) et la première bague d'indexage (8) forme le recouvrement pour les deuxièmes valeurs d'échelle (7b) associées à la deuxième plage de rotation.

6. Dispositif de réglage selon la revendication 5,
**caractérisé en ce que**
dans la plage de rotation de la première rotation du capuchon d'ajustement (2), la première bague d'indexage (8) recouvre les valeurs d'échelle (7b) de la deuxième bague d'indexage (10).

7. Dispositif de réglage selon l'une quelconque des revendications précédentes,
**caractérisé en ce que**
les premières valeurs d'échelle (7a) de la première bague d'indexage (8), lors de la transition de la première rotation à la deuxième rotation du capuchon d'ajustement (2), peuvent être déplacées sous un bord (9) du capuchon d'ajustement (2) tourné vers le bas.

8. Dispositif de réglage selon l'une quelconque des revendications précédentes,
**caractérisé en ce que**
les deuxièmes valeurs d'échelle (27b) appartenant à la deuxième plage de rotation, lors de la transition de la première à la deuxième rotation du capuchon d'ajustement (2), peuvent être déplacées hors d'un diaphragme annulaire (29) les recouvrant pendant la première plage de rotation.

9. Dispositif de réglage selon l'une quelconque des revendications précédentes,
**caractérisé en ce que**
pour le déplacement en hauteur de l'au moins une bague d'indexage (8, 28) et/ou de l'au moins une bague de diaphragme dans la région intérieure du dispositif de réglage (1) est prévu au moins un guide à coulisse périphérique (40) dans lequel s'engage au moins une goupille de balayage (42) d'une bague d'indexage (8, 28) ou d'une bague de diaphragme et qui est supporté de manière non rotative par rapport au capuchon d'ajustement (2) et aux bagues d'indexage (8, 10, 28) rotatives tournant avec le capuchon d'ajustement et qui présente une allure étagée et biseautée dans une région centrale (44) du guide à coulisse.

10. Dispositif de réglage selon l'une quelconque des revendications précédentes,
**caractérisé en ce que**
le dispositif de réglage (1) est réalisé sous forme de tour et présente, dans sa région de socle inférieure (4), un socle de montage pour le montage sur une lunette de visée, dans sa région supérieure, le capuchon d'ajustement (2) et dans sa région centrale (5), l'au moins une bague d'indexage (8, 10, 28) tournant avec le capuchon d'ajustement, qui est accouplée par le biais d'au moins une partie d'accouplement à la goupille de balayage (42) s'engageant dans le guide à coulisse (40) pour le déplacement en hauteur.

11. Dispositif de réglage selon l'une quelconque des revendications précédentes,
**caractérisé en ce que**
la première bague d'indexage extérieure (8) et la deuxième bague d'indexage (10) sont disposées coaxialement l'une au-dessus de l'autre et la première bague d'indexage extérieure (8) vient en prise à faible distance par le dessus avec la deuxième bague d'indexage (10) à la manière d'un pot.

12. Dispositif de réglage selon l'une quelconque des revendications précédentes,
**caractérisé en ce que**
la deuxième bague d'indexage située à l'intérieur (10) est disposée de manière à pouvoir tourner avec le capuchon d'ajustement (2) et avec une position en hauteur inchangeable par rapport à la partie de socle (4).
